# EUROPEAN PATENT SPECIFICATION

(11) **EP 1 826 498 B1**
(45) Date of publication and mention of the grant of the patent: **11.11.2009**
(21) Application number: 07003206.5
(22) Date of filing: 15.02.2007
(51) Int. Cl.: F24F 11/00

(54) **Network of wireless fan coils**
Netzwerk von drahtlosen Gebläsekonvektoren
Réseau d'échangeurs ventilés sans fil

(30) Priority: 27.02.2006 IT MI20060346
(43) Date of publication of application: 29.08.2007
(73) Proprietor: Intea Engineering Tecnologie Elettroniche Applicate S.R.L., 25057 Sale Marasino BS (IT)
(72) Inventor: Novali, Ivano, 25057 Sale Marasino (Prov. of Brescia) (IT); Flammini, Alessandra, 25133 Brescia (IT)
(74) Representative: Alagem Modiano, Lara S.

(56) References cited:
- EP-A- 1 445 550
- JP-A- 2004 200 857
- US-A- 5 711 480
- US-A1- 2003 227 220
- US-A1- 2004 088 082
- US-A1- 2005 040 943

## Description

The present invention relates to a network of wireless fan coils.

Currently, air-conditioning systems at the household and industrial level have become so widespread that so-called conditioners, or more correctly fan coils, can be found commonly in each room of an apartment or office.

When a plurality of fan coils are installed in an apartment, an office or more generally in any closed environment, it is desirable to have available a control system for monitoring and/or updating the status of the individual fan coils.

However, a control system necessarily has to rely on a communications network, and this can entail problems during installation, since the location of the various fan coils must be a compromise between an optimum position for conditioning the air in the environment, a position which is proximate to a point for connection to the mains and to the communications network, and a position which is close to the external unit of the fan coil.

Therefore, besides the problems encountered during the design of a control system for fan coils in finding the optimum placement of the individual fan coils, it becomes even more complex to upgrade a conditioning system already existing with a communications network.

US 5 711 480 discloses a low-cost wireless communication network for air conditioning systems, as defined in the preamble of claim 1.

The aim of the present invention is to devise a communications network architecture which simplifies the installation, upgrading or modification of air-conditioning systems.

Within this aim, an object of the invention is to allow communication of the different components of the network to be reliable.

Another object is to provide devices for the communications network which have a low cost and, if battery-powered, have an extended operating life.

This aim and these and other objects which will become better apparent hereinafter are achieved by a communications network for air-conditioning systems, as defined in claim 1.

Further characteristics and advantages of the invention will become better apparent from the description of a preferred but not exclusive embodiment of the network according to the invention, illustrated by way of non-limiting example in the accompanying drawings, wherein:
Figure 1 is a plan view of an environment in which a plurality of fan coils are installed which are connected by the communications network according to the invention;
Figure 2 is a block diagram of a fan coil used in the invention;
Figure 3 is a block diagram of a user interface device used in the invention;
Figure 4 is a diagram of a communications network according to the invention;
Figure 5 is a diagram of the network of Figure 4 in the presence of obstacles.

With reference to the figures, the network according to the invention comprises a plurality of fan coils which constitute the nodes of the network.

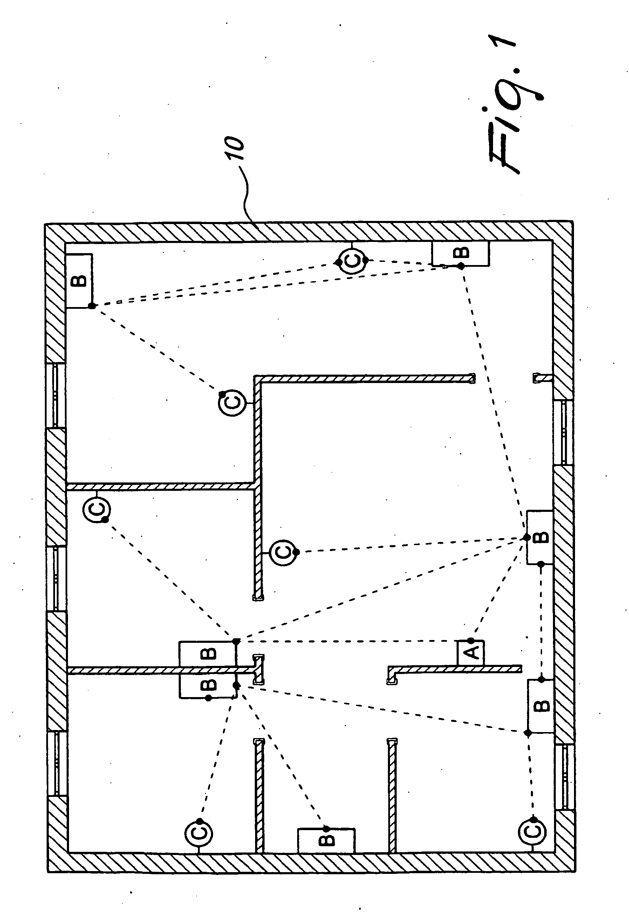

The fan coils, equally designated by the reference letter B, are mounted on the walls or ceiling of a closed environment, such as for example the environment 10, whose map is shown in Figure 1, according to the preferred climate-control requirements.

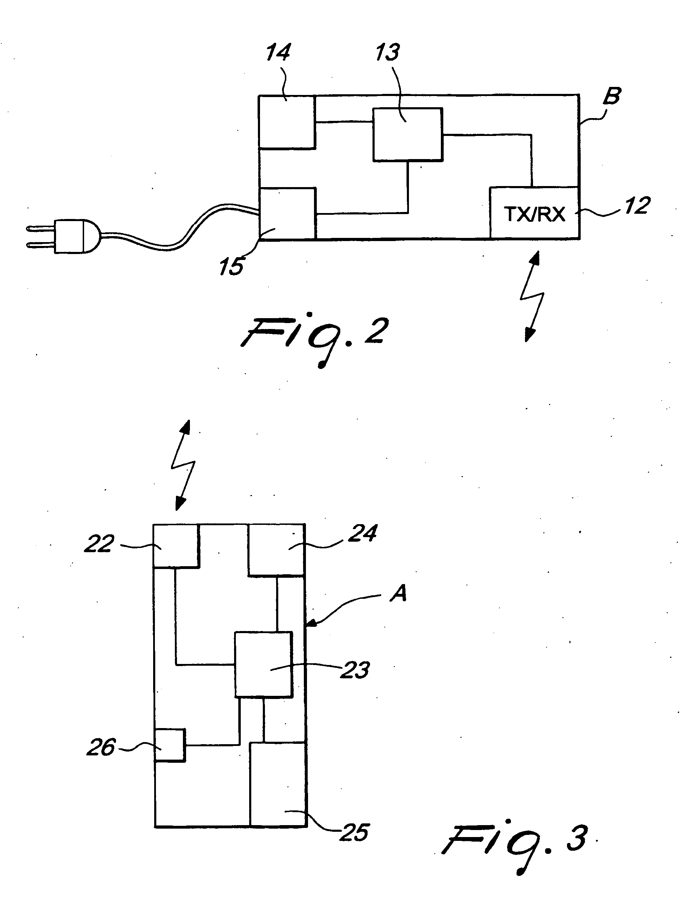

With reference to Figure 2, each fan coil B of the network is provided with a means 12 for wireless communication, which preferably comprises a radiofrequency antenna.

The wireless communication means 12 is controlled by a logic unit 13. The logic unit 13 comprises a memory (not shown) which stores the instructions for the operation of the fan coil as well as the instructions for exchanging messages within the network via the wireless communication means. The stored software instructions and the processing of the information contained in the messages can be executed by means of a microprocessor or equivalent circuit contained in the logic unit 13.

The logic unit 13 is further coupled to the conventional hydraulic and electromechanical devices 14 of the fan coil in order to control the valves, the fan and other conventional components of the fan coil which are not described in further detail here.

Finally, the fan coil B further comprises a power supply 15 which is connected to the mains.

The communications network comprises additional nodes constituted by an adjustment device A which is provided in the environment 10 and by a plurality of temperature sensing units, designated equally by the reference letter C and arranged in the locations of the environment that the designer of the conditioning system deems to be ideal for reaching the selected temperature in the various locations of the environment 10.

The adjustment device A is preferably of the portable type and comprises a battery 25, a logic unit 23 and a wireless device 22 for radiofrequency communication with the other nodes of the network. The logic unit 23 comprises a memory means which contains the instructions for exchanging messages within the network via the wireless device 22 and a microprocessor or equivalent circuit for performing the stored instructions and processing the received messages.

In particular, the instructions stored in the adjustment device A comprise the reading of operating settings to be transmitted to one or more fan coils B of the communications network.

For this purpose, the adjustment device A contains an input device 24, for example one or more buttons, by means of which a user can enter manually the selected operating settings, which are then read and processed by the logic unit 23 connected to the input device so as to be able to assemble the message to be sent to one or more recipient fan coils.

Optionally, the adjustment device A can contain an integrated temperature sensor 26, which is connected to the logic unit 23, in order to record the temperature measured in the region in which the adjustment device A is positioned and send it to the memory of the logic unit 23 for processing. In this case, the memory of the logic unit 23 contains instructions for introducing in the communications network messages which contain the temperature value measured by the integrated sensor.

Additional nodes of the wireless communications network according to the invention preferably correspond to respective temperature sensing units C, each of which comprises a temperature sensor, a wireless communications unit and a processing unit for transmitting reading messages via the wireless communication unit to at least one node of the network proximate to the sensing unit C. The reading messages contain a temperature value measured by the temperature sensor of the sensing unit C.

The memories of the fan coils B and the memory means of the adjustment device A comprise a stored common database which is divided into a dynamic part and a substantially static part.

The dynamic part of the database is updated more frequently than the static part and contains operating parameters of each of the nodes of the network, for example the measured temperature, a preset temperature, the status of the valves of the fan coil, the status of the fan of the fan coil, and the date and time. The updates of the dynamic part can occur as a consequence of the intervention of the user on the adjustment device A, as a consequence of a variation of the environmental variables detected by a sensing unit C, or in alarm or fault conditions.

The substantially static part of the common database comprises instead network configuration parameters and is updated in case of changes to the composition of the network. These configuration parameters can comprise a progressive identification number, which is assigned to each fan coil and to each temperature sensing unit of the network during the initial configuration of the network, or settings selected by the user directly on the node.

Since all type B nodes are aware of all the information available by means of the common database, each fan coil node is capable of deciding autonomously the actions to be performed for climate control of the environment. Therefore, there are no master or slave devices, and any fault or inability to communicate of one of said nodes does not compromise the operation of all the other nodes. Maximum efficiency of the climate control system is thus ensured in any condition.

The common database is available in real time to all the nodes, provided that they can communicate directly or by indirect contact via other nodes.

The communications network according to the invention is of the wireless type, since all the nodes that compose it are adapted to communicate with each other via appropriately provided wireless devices. The network according to the invention is classified as WPAN (Wireless Personal Area Network) and preferably the wireless means of communication used in the different nodes are selected so as to be able to transmit up to a distance of approximately 50 meters.

The peculiarity of the invention consists in that said wireless network is configured so as to work as a mesh network.

As is known, in mesh networks each node can send and receive messages from another node in its vicinity and can further act as a router in order to send received messages to a nearby node.

By means of the forwarding process, a wireless data packet can be sent to the destination indicated therein by passing via intermediate nodes which have reliable communication links. Moreover, if one link fails due to the presence of obstacles or heavy interference, the network automatically routes the messages via alternative paths.

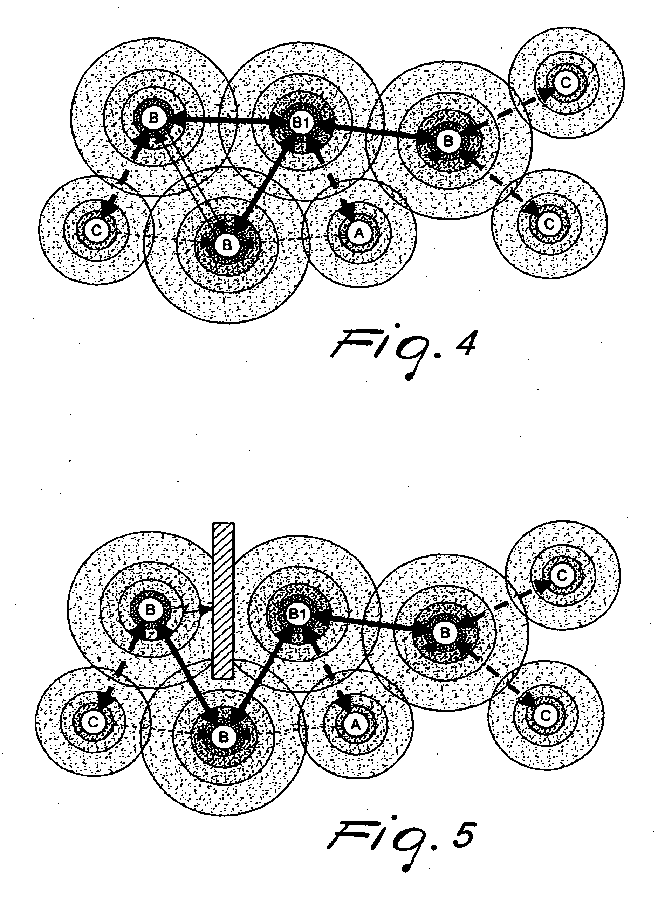

In the preferred embodiment of the invention, the memories of the fan coils B store instructions not only for sending and receiving messages but also for routing messages received from at least one node of the network toward at least one other node of the network. In this manner, each fan coil can operate as a router if a message cannot reach its destination due to an obstacle or temporary interference which prevents its direct radio transmission, as shown schematically in Figures 4 and 5.

Retransmission or routing of the received information is entrusted to the fan coils B, because by being powered directly by the mains they have no particular power consumption constraints and therefore can perform a greater number of transmissions and keep reception always active.

Information routing is of the adaptive type and allows to relocate any node in the environment without having to reconfigure the network manually. This network architecture ensures communication, and therefore operation of the climate control system, even if obstacles or interference occur which prevent communication between two or more of nodes. The system is in fact capable of operating as long as there is, between any two nodes, an uninterrupted chain of radio links between nodes which correspond to fan coils B.

This is possible thanks to the ability of the protocol implemented in the logic units of the fan coils B to retransmit received information toward the nodes which cannot receive it directly.

The fan coils B, the adjustment device A and the temperature sensing units C store instructions for communicating within the network on at least two channels, in particular a main wireless channel and on a backup wireless channel, to be used in case of interference on the main channel.

Preferably, the radio channels used are sixteen in number and the logic units of the various devices of the network are programmed to scan the power levels received on each channel when they are switched on.

The selected main channel and backup channel are the ones having the lowest received power, i.e., the ones that have less interference when the scan is performed. However, channel selection is dynamic, and if communication problems occur during normal operation due to new interference sources, the channels can be changed.

The logic units of all the nodes of the network according to the invention are preferably configured according to the IEEE 802.15.4 standard, so as to ensure low electric power consumption and longer life of the batteries of the network devices such as the sensing unit C or the adjustment device A.

For access to the communication channels, the logic units of all the nodes of the network are configured according to a time-division protocol. In particular, time is divided into repetitive cycles, within which each device has an assigned slot for transmitting information. The duration of a cycle, here indicated by T_cycle, can be selected equal to approximately 4 seconds for a network with twenty-five fan coils, twenty-four temperature sensing units C and an adjustment device A.

The time-division structure allows to avoid transmission collisions, thus increasing the life of the battery-powered nodes and more generally reducing the interference generated on the radio channels.

Communication synchronization is dictated by one of the fan coil nodes B, which is assigned this task as a result of a priority selection algorithm based on the progressive identification number assigned during network configuration and on the visibility of the nodes and is repeated at each cycle.

Preferably, the adjustment device A and the sensing units C are programmed, by way of appropriate stored instructions, so that the operating settings or the temperature value are input to the communications network with a periodic timing which is equal to the cycle T_cycle.

As an alternative, the messages generated by the adjustment device A and/or by the sensing unit C are input only if the input device receives a manual command to change the operating settings and/or if the temperature sensor detects a temperature variation. The adjustment device A, in this case, reads the values that arrive from the input device 24 or from the integrated temperature sensor every 128 ms, but the transmission of the corresponding message occurs every T_cycle, in order to save on battery consumption.

A reading every 128 ms of the temperature sensor and the transmission, if required, of the corresponding message every T_cycle are also performed by the sensing units C.

If the device A does not work due to drained batteries or for other reasons, the network still continues to operate, maintaining the last selected settings.

In order to further conserve the life of the batteries that supply power to the nodes A and C, the adjustment device and the sensing units C store instructions for keeping in sleep mode the respective wireless communication devices in order to activate them for transmission according to said periodic timing T_cycle, or as a consequence of the sensing of a temperature variation or of a manual command performed on the input device.

Preferably, the adjustment device A and the sensing units C are further programmed so as to wait to receive an acknowledgment message from the fan coil B which receives the message related to the temperature variation or operating setting variation that has just been transmitted.

The operation of the mesh network begins after a first configuration step, in which all the devices that belong to the network are placed in the environment in the preferred positions and are activated. By means of an appropriate function of the user interface, the unique serial codes and the type of the devices that belong to the network are acquired. During this step, all the devices of the same type are automatically assigned a progressive identification number (indicated by ProgIDVent and ProgIDSens, respectively, for the fan coil devices B and the sensing unit C).

The information related to the components of the network, together with other information which configure operation (filters, associations, operating modes) are then collected in the static part of the common database and are reported to all type A and B devices of said network. In this manner, all type A and B nodes are informed of the composition of the network.

By means of the priority selection algorithm based on the assigned progressive identification number, one fan coil is given the task of synchronizing the network and cyclically transmits the synchronization information to all the nodes B of the network.

The fan coil B which is given the synchronization task transmits the synchronization information (timestamp) to all the other type B nodes, again according to a mesh architecture. The communication protocol used takes into account the possibility of a fault or jamming of communication of the node assigned to synchronization, and in this case the task is transferred automatically to another node as a result of a new selection.

During the normal operation of the network, the fan coils B which receive a message regarding the update of the common database on the part of any other device of the network reply with a delay which is variable according to their progressive identifier ProgIDVent, unless they detect that any other device B has already answered. Usually, each device B waits before answering for a time which is equal to ProgIDVent x 4 ms.

The device A or C which has received the answer from the fan coil identified by ProgIDVent enters in the next message the specific identifier ProgIDVent and authorizes the recipient fan coil to reply immediately, in order to minimize the power-on times of the device and extend the life of its batteries.

With reference to Figures 4 and 5, during operation the fan coils B communicate continuously and exchange acknowledgment messages. The node B 1 is the one that provides communication synchronization.

In the drawing, the solid lines represent a continuous time-division communication among the nodes, whereas the broken lines indicate communication only in the presence of an event such as the temperature variation or a manual setting, or periodic communication. The double arrows indicate communication with acknowledgment by the recipient node, while the single arrows indicate that the transmission has been ignored by the recipient node, since a node with a progressive identifier having a higher priority has answered.

As can be seen, the node B 1 communicates continuously with all the nodes B that it can see, while the nodes B that can see the node B 1 ignore the messages received from the other nodes B because certainly these last nodes have already received an answer from the node B1, since it is the node having the highest priority.

In the presence of an obstacle which blocks wireless communication between a node B and the node B1, the node affected by the obstacle begins to communicate with the node B which it can see and waits for an answer.

In practice it has been found that the network architecture according to the invention fully achieves the intended aim, since a self-configuring network has been provided which does not require the presence of a network administrator or of a centralized control in order to work. Once the initial configuration has been completed, if nodes are added the network is in fact capable of detecting them autonomously.

If one or more nodes are isolated from the rest of the network, they continue to operate on the basis of the updated information which in any case they are able to exchange and on the basis of the last received settings. For example, the fan coil can use the measurement of the ambient temperature obtained locally, optionally corrected on the basis of the variations detected previously with respect to the reference measurement.

The network architecture thus conceived is susceptible of numerous modifications and variations, all of which are within the scope of the appended claims. All the details may further be replaced with other technically equivalent elements.

## Claims

1. A communications network for air-conditioning systems, comprising a plurality of fan coils (B) which correspond to respective wireless nodes of the network, each of said fan coils being provided with a respective wireless communications means (12) for bidirectional communication with the other fan coils (B) of the network and being further provided with a memory which contains instructions for exchanging messages with the nodes of said network according to a mesh-type logic by way of said wireless communications means, **characterized in that** it further comprises an adjustment device (A) which forms an additional respective wireless node of the network, said adjustment device (A) comprising memory means, the memories of said fan coils and the memory means of said at least one adjustment device (A) storing a common database which contains operating parameters of each one of the nodes of the network, said operating parameters comprising at least one among the following: measured temperature, preset temperature, fan coil valve status, fan coil fan status

2. The communications network according to claim 1, wherein said memory of the fan coil (B) comprises instructions for routing, via the wireless communication means (12), messages received from at least one node of the network toward at least one other node of the network.

3. The communications network according to claim 1, **characterized in that** said adjustment device (A) comprises an input device (24) for selecting operating settings of said fan coils (B), a device (22) for wireless communication and said memory means which contains instructions for introducing in said communications network, via said wireless communication device (22), messages which contain said operating settings.

4. The communications network according to claim 2 or 3, wherein said adjustment device (A) comprises an integrated temperature sensor (26), said memory means of the adjustment device (A) further comprising instructions for introducing in said communications network, via said wireless communications device (22), a message which contains the temperature value measured by said integrated temperature sensor (26).

5. The communications network according to one or more of claims 2 to 4, **characterized in that** said memory means of the adjustment device (A) comprises stored instructions for transmitting said messages which contain the operating settings or the temperature value with a periodic timing, or for transmitting said messages if the input device (24) receives a command to vary the operating settings and/or if the integrated temperature sensor (26) detects a temperature variation.

6. The communications network according to claim 5, wherein the memory means of the adjustment device (A) contains instructions for keeping in sleep mode said wireless communications device (22) and for activating it for transmission according to said periodic timing, or as a consequence of said variation command, or as a consequence of the detection of a temperature variation on the part of said integrated sensor (26), said memory means further comprising instructions for receiving, via said wireless communications device (22), an acknowledgement message from the fan coil (B) which receives the message which contains the operating settings.

7. The communications network according to one or more of claims 2 to 6, **characterized in that** said adjustment device (A) is portable.

8. The communications network according to any one of the preceding claims, comprising at least one temperature sensing unit (C) which corresponds to an additional respective wireless node of the network, said temperature sensing unit (C) comprising a temperature sensor, a wireless communications unit and a processing unit for transmitting reading messages via said wireless communications unit to at least one node of the network proximate to said sensing unit (C), said reading messages comprising a value of the temperature measured by said temperature sensor.

9. The communications network according to claim 8, wherein said processing unit comprises stored instructions for transmitting the temperature value when the temperature sensor detects a temperature variation and/or for transmitting with a periodic timing the measured temperature value.

10. The communications network according to claim 9, wherein the processing unit further contains instructions for keeping in sleep mode said wireless communications unit and for activating it to transmit according to said periodic timing or as a consequence of the sensing of a temperature variation on the part of said temperature sensor, said processing unit further comprising instructions for receiving, via said wireless communications unit, an acknowledgment message from the fan coil (B) that receives the message containing the transmitted temperature value.

11. The communications network according to one or more of the preceding claims, wherein the memory of each fan coil (B) contains instructions to keep always active in reception the wireless communication means and to activate it with a periodic timing for the transmission of said messages.

12. The communications network according to claim 8, wherein said database further contains network configuration parameters, which comprise a progressive identification number for each fan coil (B) and for each temperature sensing unit (C) of the network.

13. The communications network according to one or more of the preceding claims, wherein one of said fan coils (B) is adapted to transmit via said wireless communications means a network synchronization signal, said network being configured according to a time-division protocol with a cycle which is equal to said periodic timing.

14. The communications network according to claim 13, wherein said network is configured so that the fan coil (B) adapted to transmit the synchronization signal is selected according to a priority selection algorithm which is based on said progressive identification number and on the visibility of the nodes of the network, said algorithm being repeated with said periodic timing.

15. The communications network according to one or more of the preceding claims wherein the fan coils (B), the adjustment device (A) and said at least one temperature sensing unit (C) store instructions for communicating over said network on a main wireless channel and a backup wireless channel to be used in case of interference on the main channel.

## Patentansprüche

1. Kommunikationsnetzwerk für Klimaanlagensysteme, umfassend eine Vielzahl von Ventilatorspulen (B), die jeweils mit einem kabellosen Knoten des Netzwerkes korrespondieren, wobei jede der Ventilatorspulen mit jeweils einem kabellosen Kommunikationsmittel (12) zur bidirektionalen Kommunikation mit den anderen Ventilatorspulen (B) des Netzwerkes und weiters mit einem Speicher ausgestattet ist, welcher Anweisungen zum Austausch von Nachrichten mit den Knoten des Netzwerkes gemäß einer maschenartigen Logik mittels der kabellosen Kommunikationsmittel enthält, **dadurch gekennzeichnet, daß** es weiters eine Einstellvorrichtung (A) umfaßt, die einen zusätzlichen entsprechenden kabellosen Knoten des Netzwerkes bildet, wobei die Einstellvorrichtung (A) Speichermittel umfaßt, wobei die Speicher der Ventilatorspulen und die Speichermittel der zumindest einen Einstellvorrichtung (A) eine allgemeine Datenbank einlagern, welche Betriebsparameter jedes einzelnen der Knoten des Netzwerkes enthält, wobei die Betriebsparameter zumindest einen aus der folgenden Gruppe umfassen: gemessene Temperatur, gegenwärtige Temperatur, Ventilatorspulen-Ventilstatus, Ventilatorspulen-Ventilatorstatus.

2. Kommunikationsnetzwerk nach Anspruch 1, wobei der Speicher der Ventilatorspule (B) Anweisungen zum Senden von Nachrichten, die von zumindest einem Knoten des Netzwerkes empfangen wurden, über die kabellosen Kommunikationsmittel (12) in Richtung zumindest eines der anderen Knoten des Netzwerkes enthält.

3. Kommunikationsnetzwerk nach Anspruch 1, **dadurch gekennzeichnet, daß** die Einstellvorrichtung (A) eine Eingabevorrichtung (24) zum Auswählen der Betriebseinstellwerte der Ventilatorspulen (B) umfaßt, eine Vorrichtung (22) zur kabellosen Kommunikation und die Speichermittel, die Anweisungen zum Einführen von Nachrichten, die die Betriebseinstellwerte enthalten, über die kabellose Kommunikationsvorrichtung (22) in das Kommunikationsnetzwerk enthält.

4. Kommunikationsnetzwerk nach Anspruch 2 oder 3, wobei die Einstellvorrichtung (A) einen integrierten Temperatursensor (26) umfaßt, wobei die Speichermittel der Einstellvorrichtung (A) weiters Anweisungen zum Einführen von Nachrichten, die die von dem integrierten Temperatursensor (26) gemessene Ventiltemperatur enthalten, über die kabellose Kommunikationsvorrichtung (22) in das Kommunikationsnetzwerk umfassen.

5. Kommunikationsnetzwerk nach einem oder mehreren der Ansprüche 2 bis 4, **dadurch gekennzeichnet, daß** die Speichermittel der Einstellvorrichtung (A) gespeicherte Anweisungen zur Übertragung der Nachrichten, die die Betriebseinstellwerte oder die Ventiltemperatur mit einer periodischen Zeitvorgabe enthalten, umfassen, oder zum Übertragen der Nachrichten, wenn die Eingabevorrichtung (24) ein Kommando zur Veränderung der Betriebseinstellwerte empfängt und/oder wenn der integrierte Temperatursensor (26) eine Temperaturveränderung erfaßt.

6. Kommunikationsnetzwerk nach Anspruch 5, wobei die Speichermittel der Einstellvorrichtung (A) Anweisungen zum Bereithalten der kabellosen Kommunikationsvorrichtung (22) und zu ihrer Aktivierung zur Übertragung gemäß der periodischen Zeitvorgabe enthalten, oder als eine Konsequenz des Veränderungskommandos oder als eine Konsequenz der Erfassung einer Temperaturveränderung auf dem Teil des integrierten Sensors (26), wobei die Speichermittel weiters Anweisungen zum Empfangen einer Sestätigungsnachricht über die kabellose Kommunikationsvorrichtung (22) von der Ventilatorspule (B) umfassen, welche die Nachricht empfängt, die die Betriebseinstellwerte enthält.

7. Kommunikationsnetzwerk gemäß einem oder mehreren der Ansprüche 2 bis 6, **dadurch gekennzeichnet, daß** die Einstellvorrichtung (A) transportabel ist.

8. Kommunikationsnetzwerk gemäß einem der vorangehenden Ansprüche, umfassend zumindest eine temperaturwahrnehmende Einheit (C), die mit einem weiteren entsprechenden kabellosen Knoten des Netzwerkes korrespondiert, wobei die temperaturwahrnehmende Einheit (C) einen Temperatursensor umfaßt, eine kabellose Kommunikationseinheit und eine Rechnereinheit zur Übertragung von Lesenachrichten über die kabellose Kommunikationseinheit an zumindest einen Knoten des Netzwerkes benachbart zu der wahrnehmenden Einheit (C), wobei die Lesenachrichten einen Wert der Temperatur, die durch den Temperatursensor gemessen ist, umfassen.

9. Kommunikationsnetzwerk nach Anspruch 8, wobei die Rechnereinheit gespeicherte Anweisungen zur Übertragung des Temperaturwertes umfaßt, sobald der Temperatursensor eine Temperaturveränderung erfaßt, und/oder zur Übertragung des gemessenen Temperaturwertes mit einer periodischen Zeitvorgabe.

10. Kommunikationsnetzwerk nach Anspruch 9, wobei die Rechnereinheit weiters Anweisungen zum Halten der kabellosen Kommunikationseinheit im Schlafmodus und zu ihrer Aktivierung enthält, um gemäß der periodischen Zeitvorgabe oder als eine Konsequenz der Wahrnehmung einer Temperaturveränderung auf dem Teil des Temperatursensors zu senden, wo- bei die Rechnereinheit weiters Anweisungen zum Empfangen einer Bestätigungsnachricht von der Ventilatorspule (B), die die den übertragenen Temperaturwert enthaltene Nachricht empfängt, über die kabellose Kommunikationseinheit umfaßt.

11. Kommunikationsnetzwerk nach einem oder mehreren der vorangehenden Ansprüche, wobei der Speicher jeder Ventilatorspule (B) Anweisungen zum immerwährenden Aktivhalten des Empfanges der kabellosen Kommunikationsmittel enthält, und um sie mit einer periodischen Zeitvorgabe zur Übertragung dieser Nachrichten zu aktivieren.

12. Kommunikationsnetzwerk nach Anspruch 8, wobei die Datenbank weiters Netzwerkkonfigurationsparameter enthält, die eine fortlaufende Identifikationsnummer für jede Ventilatorspule (B) und für jede temperaturwahrnehmende Einheit (C) des Netzwerkes umfassen.

13. Kommunikationsnetzwerk nach einem oder mehreren der vorangehenden Ansprüche, wobei eine der Ventilatorspulen (B) eingerichtet ist, um über die kabellosen Kommunikationsmittel ein Netzwerksynchronisationssignal zu senden, wobei das Netzwerk gemäß eines Zeitabteilungsprotokolls innerhalb eines Zyklusses, der der periodischen Zeitvorgabe gleicht, konfiguriert wird.

14. Kommunikationsnetzwerk gemäß Anspruch 13, wobei das Netzwerk so konfiguriert ist, daß die zur Übertragung des Synchronisationssignals eingerichtete Ventilatorspule (B) gemäß eines Algorithmusses der Vorrangigkeitsauswahl ausgewählt ist, welcher auf der fortlaufenden Identifikationsnummer und auf der Sichtbarkeit der Knoten des Netzwerkes gegründet ist, wobei der Algorithmus mit der periodischen Zeitvorgabe wiederholt wird.

15. Kommunikationsnetzwerk gemäß einem oder mehreren der vorangehenden Ansprüche, wobei die ventilatorspulen (B), die Einstellvorrichtung (A) und die zumindest eine temperaturwahrnehmende Einheit (C) Anweisungen zur Kommunikation über das Netzwerk auf einem kabellosen Hauptkanal und einem kabellosen Sicherungskanal zur Anwendung im Falle einer Beeinträchtigung auf dem Hauptkanal speichern.

## Revendications

1. Réseau de communications pour des systèmes de climatisation, comportant une pluralité d'échangeurs ventilés (B) qui correspondent à des noeuds sans fil respectifs du réseau, chacun desdits échangeurs ventilés étant muni de moyens de communication sans fil respectifs (12) en vue d'une communication bidirectionnelle avec les autres échangeurs ventilés (B) du réseau et étant en outre munis d'une mémoire qui contient des instructions pour échanger des messages avec les noeuds dudit réseau conformément à une logique de type maille par l'intermédiaire desdits moyens de communication sans fil, **caractérisé en ce qu'**il comporte en outre un dispositif d'ajustement (A) qui forme un noeud sans fil respectif supplémentaire du réseau, ledit dispositif d'ajustement (A) comportant des moyens de mémorisation, les mémoires desdits échangeurs ventilés et les moyens de mémorisation dudit au moins un dispositif d'ajustement (A) mémorisant une base de données commune qui contient des paramètres opérationnels de chacun des noeuds du réseau, lesdits paramètres opérationnels comportant au moins l'un parmi les paramètres suivants : la température mesurée, la température prédéfinie, l'état de la vanne de l'échangeur ventilé, l'état du ventilateur de l'échangeur ventilé.

2. Réseau de communications selon la revendication 1, dans lequel ladite mémoire de l'échangeur ventilé (B) comporte des instructions pour acheminer, via les moyens de communication sans fil (12), des messages reçus en provenance d'au moins un noeud du réseau vers au moins un autre noeud du réseau.

3. Réseau de communications selon la revendication 1, **caractérisé en ce que** ledit dispositif d'ajustement (A) comporte un dispositif d'entrée (24) pour sélectionner des paramètres opérationnels desdits échangeurs ventilés (B), un dispositif (22) en vue d'une communication sans fil et lesdits moyens de mémorisation qui contiennent des instructions pour introduire dans ledit réseau de communications, via ledit dispositif de communication sans fil (22), des messages qui contiennent lesdits paramètres opérationnels.

4. Réseau de communications selon la revendication 2 ou 3, dans lequel ledit dispositif d'ajustement (A) comporte un détecteur de température intégré (26), lesdits moyens de mémorisation du dispositif d'ajustement (A) comportant en outre des instructions pour introduire dans ledit réseau de communications, via ledit dispositif de communication sans fil (22), un message qui contient la valeur de température mesurée par ledit détecteur de température intégré (26).

5. Réseau de communications selon une ou plusieurs des revendications 2 ou 4, **caractérisé en ce que** lesdits moyens de mémorisation du dispositif d'ajustement (A) comportent des instructions mémorisées pour transmettre lesdits messages qui contiennent les paramètres opérationnels ou la valeur de température selon une synchronisation périodique, ou pour transmettre lesdits messages si le dispositif d'entrée (24) reçoit une instruction pour faire varier les paramètres opérationnels et/ou si le détecteur de température intégré (26) détecte une variation de température.

6. Réseau de communications selon la revendication 5, dans lequel les moyens de mémorisation du dispositif d'ajustement (A) contiennent des instructions pour maintenir en mode veille ledit dispositif de communication sans fil (22) et pour activer celui-ci en vue d'une transmission conformément à ladite synchronisation périodique, ou en conséquence de ladite instruction de variation, ou en conséquence de la détection d'une variation de température sur la partie dudit détecteur intégré (26), lesdits moyens de mémorisation comportant en outre des instructions pour recevoir, via ledit dispositif de communication sans fil (22), un message d'acquittement en provenance de l'échangeur ventilé (B) recevant le message qui contient les paramètres opérationnels.

7. Réseau de communications selon une ou plusieurs des revendications 2 à 6, **caractérisé en ce que** ledit dispositif d'ajustement (A) est portable.

8. Réseau de communications selon l'une quelconque des revendications précédentes, comportant au moins une unité de détection de température (C) qui correspond à un noeud sans fil respectif supplémentaire du réseau, ladite unité de détection de température (C) comportant un détecteur de température, une unité de communication sans fil et une unité de traitement pour transmettre des messages de lecture via ladite unité de communication sans fil à au moins un noeud du réseau proche de ladite unité de détection (C), lesdits messages de lecture comportant une valeur de la température mesurée par ledit détecteur de température.

9. Réseau de communications selon la revendication 8, dans lequel ladite unité de traitement comporte des instructions mémorisées pour transmettre la valeur de température lorsque le détecteur de température détecte une variation de température et/ou pour transmettre selon une synchronisation périodique la valeur de température mesurée.

10. Réseau de communications selon la revendication 9, dans lequel l'unité de traitement contient en outre des instructions pour maintenir en mode veille ladite unité de communication sans fil et pour activer celle-ci en vue d'une transmission conformément à ladite synchronisation périodique, ou en conséquence de la détection d'une variation de température sur la partie dudit détecteur de température, ladite unité de traitement comportant en outre des instructions pour recevoir, via ladite unité de communication sans fil, un message d'acquittement en provenance de l'échangeur ventilé (B) qui reçoit le message contenant la valeur de température transmise.

11. Réseau de communications selon une ou plusieurs des revendications précédentes, dans lequel la mémoire de chaque échangeur ventilé (B) contient des instructions pour maintenir toujours actifs en réception les moyens de réception sans fil et pour activer ceux-ci selon une synchronisation périodique en vue de la transmission desdits messages.

12. Réseau de communications selon la revendication 8, dans lequel ladite base de données contient en outre des paramètres de configuration de réseau, qui comportent un numéro d'identification progressive pour chaque échangeur ventilé (B) et pour chaque unité de détection de température (C) du réseau.

13. Réseau de communications selon une ou plusieurs des revendications précédentes, dans lequel l'un desdits échangeurs ventilés (B) est adapté pour transmettre, via lesdits moyens de communication sans fil, un signal de synchronisation de réseau, ledit réseau étant configuré conformément à un protocole de division dans le temps avec un cycle qui est égal à ladite synchronisation périodique.

14. Réseau de communications selon la revendication 13,dans lequel ledit réseau est configuré
de sorte que l'échangeur ventilé (B) adapté pour transmettre le signal de synchronisation est sélectionné conformément à un algorithme de sélection de priorité qui est basé sur ledit numéro d'identification progressive et sur la visibilité des noeuds du réseau, ledit algorithme étant répété selon ladite synchronisation périodique.

15. Réseau de communications selon une ou plusieurs des revendications précédentes, dans lequel les échangeurs ventilés (B), le dispositif d'ajustement (A) et ladite au moins une unité de détection de température (C) mémorisent des instructions pour communiquer sur ledit réseau sur un canal sans fil principal et un canal sans fil de secours à utiliser en cas d'interférence sur le canal principal.
